# EUROPEAN PATENT APPLICATION

(11) **EP 3 276 639 A1**
(43) Date of publication of application: **31.01.2018**
(21) Application number: 15886177.3
(22) Date of filing: 23.03.2015
(51) Int. Cl.: H01F 1/055

(54) **MAGNET MATERIAL, PERMANENT MAGNET, MOTOR, AND GENERATOR**

(71) Applicant: Kabushiki Kaisha Toshiba, Minato-ku Tokyo 105-8001 (JP)
(72) Inventor: SANADA, Naoyuki, Tokyo 105-8001 (JP); SAKURADA, Shinya, Tokyo 105-8001 (JP)
(74) Representative: Hoffmann Eitle
(86) International application number: PCT/JP2015/001626
(87) International publication number: WO 2016/151619

(57) **Abstract**

A magnet material of an embodiment includes a composition expressed by R₁Nₓ(CrₚSi_{q}M_{1-p-q})_{z}, where R represents at least one element selected from Y, La, Ce, Pr, Nd, and Sm, M represents at least one element selected from Fe and Co, x is 0.5≤x≤1.5 (atomic ratio), p is 0.005≤p≤0.2 (atomic ratio), q is 0.005≤q≤0.2 (atomic ratio), and z is 6.0≤z≤7.5 (atomic ratio). The magnet material satisfies a condition of I_{α-Fe}/I₂₋₁₇₋₃<0.05, where I_{α-Fe} is a maximum intensity of X-ray diffraction peaks from an α-Fe phase and I₂₋₁₇₋₃ is a maximum intensity of X-ray diffraction peaks from an R₂M₁₇N₃ phase, in an X-ray diffraction profile of the magnet material.

## Description

### FIELD

Embodiments described herein generally relate to a magnet material, a permanent magnet, a motor, and a power generator.

### BACKGROUND

Rare-earth magnets such as Sm-Co-based magnets and Nd-Fe-B-based magnets are known as high-performance permanent magnets. Fields of application of the rare-earth magnets include electrical devices such as motors, speakers, and measuring instruments, and further hybrid electric vehicles (HEV) and electric vehicles (EV). In recent years, the downsizing has been increasingly required of various electrical devices, and a demand for motors to be used in HEV and EV has been increasing. To meet these requirements, permanent magnets having a higher maximum magnetic energy product ((BH)ₘₐₓ)) are required.

A promising magnet material for a higher performance permanent magnet is a material in which a rare-earth element is combined with a transition metal element such as Fe. A Sm-Fe-N-based material has high saturation magnetization comparable to that of a Nd-Fe-B-based material and high magnetic anisotropy exceeding that of the Nd-Fe-B-based material and thus its application as a high-performance magnet is expected. The Sm-Fe-N-based magnet material, however, thermally decomposes by being heated at temperatures of about 550°C or higher. This defect of the Sm-Fe-N-based material does not allow the use of sintering for its densification. At present, the application of the Sm-Fe-N-based magnet material is limited to a bond magnet.

To solve such a problem, replacing part of Fe of the Sm-Fe-N-based magnet material with Cr and Si to raise its thermal decomposition temperature has been proposed. Specifically, as a result of nitriding a material in which part of Fe of its Sm₂Fe₁₇ phase is replaced with Cr and Si, a peak value of thermal decomposition becomes higher to about 820 to about 840°C in differential scanning calorimetry of a Sm₂(Fe, Cr, Si)₁₇Nₓ phase. Using such a Sm-(Fe, Cr, Si)-N-based magnet material makes it possible to produce a sintered magnet by relatively low-temperature hot pressing.

A conventional Sm-(Fe, Cr, Si)-N-based magnet material, however, includes a relatively large amount of an α-Fe phase. In a permanent magnet made of the Sm-(Fe, Cr, Si)-N-based magnet material including the α-Fe phase, the α-Fe phase in the magnet material hinders the magnet from having sufficient magnetic properties. In other words, the conventional Sm-(Fe, Cr, Si)-N-based magnet material does not have a Sm₂Fe₁₇Nₓ phase that is homogeneous enough as a raw material powder of, for example, a sintered magnet. Under such circumstances, a Sm-(Fe, Cr, Si)-N-based magnet material including a homogeneous Sm₂Fe₁₇Nₓ phase is required.

### RELEVANT REFERENCES

### Patent Reference

Reference 1: JP-ANo. 2002-313614

### SUMMARY

It is an object of embodiments of the present invention to provide a Sm-(Fe, Cr, Si)-N-based magnet material that has a lower content of impurity phases such as an α-Fe phase and thus has improved magnetic properties, and a permanent magnet, a motor, and a power generator including the magnet material.

A magnet material of an embodiment includes a composition expressed by
a composition formula:

R₁NₓCrₚSi_{q}M_{1-p-q})_{z},

where R represents at least one element selected from the group consisting of Y, La, Ce, Pr, Nd, and Sm, M represents at least one element selected from the group consisting of Fe and Co, x represents an atomic ratio satisfying 0.5≤x≤1.5, p represents an atomic ratio satisfying 0.005 ≤p≤0.2, q represents an atomic ratio satisfying 0.005≤q≤0.2, and z represents an atomic ratio satisfying 6.0 ≤z≤7.5. The magnet material of the embodiment satisfies a condition of I_{α-Fe}/I₂₋₁₇₋₃<0.05, where I_{α-Fe} is a maximum intensity of X-ray diffraction peaks from an α-Fe phase and I₂₋₁₇₋₃ is a maximum intensity of X-ray diffraction peaks from an R₂M₁₇N₃ phase, in an X-ray diffraction profile of the magnet material.

### BRIEF DESCRIPTION OF THE DRAWINGS

FIG. 1 is a chart illustrating X-ray diffraction profiles of a magnet material of an example 1 before and after the magnet material is nitrided.
FIG. 2 is a chart illustrating X-ray diffraction profiles of a magnet material of a comparative example 1 before and after the magnet material is nitrided.
FIG. 3 is a view illustrating a permanent magnet motor of an embodiment.
FIG. 4 is a view illustrating a variable magnetic flux motor of an embodiment.
FIG. 5 is a view illustrating a power generator of an embodiment.

### DETAILED DESCRIPTION

A magnet material of an embodiment will be hereinafter described. The magnet material of the embodiment includes a composition expressed by
a composition formula:

R₁Nₓ(CrₚSi_{q}M_{1-p-q})_{z}... (1),

where R represents at least one element selected from a group consisting of Y, La, Ce, Pr, Nd, and Sm, M represents at least one element selected from a group consisting of Fe and Co, x represents an atomic ratio satisfying 0.5≤x≤ 1.5, p represents an atomic ratio satisfying 0.005≤p≤0.2, q represents an atomic ratio satisfying 0.005≤q≤0.2, and z represents an atomic ratio satisfying 6.0≤z≤7.5.

In the composition formula (1) expressing the composition of the magnet material of the embodiment, the R element is at least one element selected from yttrium (Y), lanthanum (La), cerium (Ce), praseodymium (Pr), neodymium (Nd), and samarium (Sm). Any of these light rare earth elements (R elements) imparts high magnetic anisotropy and a high coercive force to the magnet material. 50% at% or more of the R element is preferably Sm, and 70 at% or more of the R element is desirably Sm. Using such an R element can enhance performance, in particular, the coercive force, of a permanent magnet with good reproducibility.

An atomic ratio of the R element and the other metal elements (M, Cr, Si) falls within a range of 1 : 6 to 1 : 7.5 (a value of z falls within a range of 6 to 7.5). If the atomic ratio z of the other metal elements to the R element is more than 7.5, a precipitation amount of hetero-phases such as an α-Fe phase increases. However, if the atomic ratio z is less than 6, saturation magnetization greatly decreases. The atomic ratio z is preferably 6.3 or more, and more preferably 6.7 or more. Further, the atomic ratio z is preferably 7.3 or less, and more preferably 7.1 or less. This will be described in detail later.

Nitrogen (N) is present mainly at an interstitial position (penetration position) of a main phase of a crystal, and makes a crystal lattice larger than and makes an electronic structure different from those of a crystal not containing nitrogen. These effects of the nitrogen improve the Curie temperature, magnetic anisotropy, and saturation magnetization of the magnet material. An atomic ratio of the R element and the nitrogen falls within a range of 1 : 0.5 to 1 : 1.5 (a value of x falls within a range of 0.5 to 1.5). If the atomic ratio x of the nitrogen to the R element is less than 0.5, the magnet material does not sufficiently have the effects given by containing the nitrogen. If the atomic ratio x is more than 1.5, the properties such as the saturation magnetization decrease. The atomic ratio x preferably falls within a range of 1 to 1.5. Part of the nitrogen may be replaced with at least one element (X) selected from hydrogen (H), boron (B), and carbon (C). The X element also has the same effects as those of the nitrogen. However, the excessive replacement of the nitrogen with the X element causes disadvantages such as the deterioration of the magnetic anisotropy. A replacement amount with the X element is preferably 50 at% or less of the nitrogen.

The M element is at least one element selected from iron (Fe) and cobalt (Co). The M element is responsible mainly for magnetization of the magnet material. The magnet material containing a relatively large amount of the M element can have higher saturation magnetization. However, too large a content of the M element causes the precipitation of the α-Fe phase to lower the coercive force. A content ratio of Fe in the M element is preferably 50 at% or more and desirably 70 at% or more. Fe in the M element contributes especially to the improvement of the magnetization of the magnet material. The magnet material containing Co as part of the M element has a higher Curie temperature, improved thermal stability, and a higher coercive force. From this point of view, the magnet material preferably contains Co as part of the M element.

Part of the M element may be replaced with at least one element (A) selected from titanium (Ti), zirconium (Zr), hafnium (Hf), vanadium (V), niobium (Nb), tantalum (Ta), molybdenum (Mo), tungsten (W), manganese (Mn), nickel (Ni), copper (Cu), zinc (Zn), aluminum (Al), gallium (Ga), and germanium (Ge). These A elements contribute to improvement of magnetic properties, for example, the coercive force. However, the excessive replacement of the M element with the A element deteriorates the magnetization. The replacement amount with the A element is preferably 20 at% or less of the M element.

Chromium (Cr) and silicon (Si) are affective for improving the thermal stability of the R-M-N-based magnet material and raising its thermal decomposition temperature. These elements (Cr, Si) mainly replace sites occupied by the M element in the main phase. Cr improves the thermal stability of the crystal by changing the number of d electrons in the crystal. Si improves the thermal stability of the crystal by reducing the size of the crystal lattice. Accordingly, the co-presence of Cr and Si in the crystal improves the thermal stability of the R-M-N-based magnet material to a state allowing the application of a sintering process.

The content of Cr is not less than 0.5 at% nor more than 20 at% to the total amount of the M element, Cr, and Si. The magnet material whose Cr content is too low does not sufficiently have the effect given by containing Cr. Too large a content of Cr deteriorates the magnetic properties such as the saturation magnetization of the magnet material. The content of Cr is preferably 3 to 18 at%, and more preferably 5 to 15 at% to the total amount of the M element, Cr, and Si. The content of Si is not less than 0.5 at% nor more than 20 at% to the total amount of the M element, Cr, and Si. The magnet material whose Si content is too low does not sufficiently have the effect given by containing Si. Too large a content of Si deteriorates the magnetic properties such as the saturation magnetization of the magnet material. The content of Si is preferably 1 to 15 at%, and more preferably 1 to 10 at% to the total amount of the M element, Cr, and Si. The total content of Cr and Si is preferably 5 to 20 at%, and more preferably 8 to 15 at% to the total amount of the M element, Cr, and Si.

In the fabrication of a Sm-Fe-N-based magnet material, its constituent elements, that is, Sm and the transition metal element such as Fe are first mixed at a predetermined ratio, and an alloy is fabricated through, for example, arc melting or high-frequency melting of the mixed raw material or through the application of a reduction diffusion method to the mixed raw material. A Sm₂Fe₁₇Nₓ powder is prepared through nitridation of the fabricated alloy, whereby the magnet material is produced. The alloy to be nitrided is mainly composed of a Sm₂Fe₁₇ phase. For the Sm₂Fe₁₇Nₓ powder to be homogeneous, it has been conventionally considered desirable that a ratio of Sm and Fe (Sm/Fe ratio) is 2/17.

According to a two-component system phase diagram of a Sm-Fe system, a ratio of Sm and Fe (Sm/Fe ratio) smaller than 2/17 (a low Sm content) results in excessive Fe and thus causes the system to have a mixed phase of a Sm₂Fe₁₇ phase and an α-Fe phase. The Sm/Fe ratio larger than 2/17 (a high Sm content) results in excessive Sm and thus causes the system to have a SmFe₃ phase and so on together with the Sm₂Fe₁₇ phase. The z value in the composition formula of the magnet material calculated from the above Sm/Fe ratio (2/17) is 8.5. However, an actually fabricated alloy whose z value approximates 8.5 contains a small amount of the α-Fe phase.

In order for the magnet material not to include the α-Fe phase, the Sm content needs to be increased (the z value needs to be less than 8.5) as described above. The increase of the Sm content, however, may result in the generation of impurities such as the SmFe₃ phase. According to the conventional idea, the method of increasing the Sm content is not suited for producing a homogeneous Sm₂Fe₁₇ phase. An actually fabricated alloy whose z value is less than 8.5 contains a SmFe₃ phase and so on together with a Sm₂Fe₁₇ phase.

As a result of studies and researches on this problem, the present inventors have found out that, in fabricating a magnet material, as a result of nitriding an alloy powder containing a SmFe₃ phase and so on together with a Sm₂Fe₁₇ phase, the SmFe₃ phase and so on in the alloy powder disappear almost completely. The present inventors have also found out that the fabricated magnet material is composed of a substantially homogeneous Sm₂Fe₁₇Nₓ phase without containing an α-Fe phase. That is, nitriding the alloy powder whose z value in the composition formula (1) is less than the Sm/Fe ratio (2/17) ascribable to the Sm₂Fe₁₇ phase makes it possible to fabricate the magnet material composed of the substantially homogeneous Sm₂Fe₁₇Nₓ phase. From a composition system containing Cr and Si, it is also possible to produce a magnet material composed of a substantially homogeneous R₂(M, Cr, Si)₁₇Nₓphase in the same manner.

The alloy powder to be nitrided is prepared so as to satisfy the composition expressed by the formula (2).
composition formula:

R₁(CrₚSi_{q}M_{1-p-q})_{z} ... (2)

In the composition formula (2), an atomic ratio z representing a ratio of the total content of the metal elements (M, Cr, Si) to the R element is not less than 6. 0 nor more than 7.5. What p and q represent are the same as those in the composition formula (1). Applying predetermined nitriding to an alloy powder having such a composition results in a magnet material having the composition expressed by the aforesaid composition formula (1) and composed of a substantially homogeneous R₂(M, Cr, Si)₁₇Nₓ phase.

When the z value is more than 7.5 in the composition formula (1) and the composition formula (2), the α-Fe phase is likely to appear. The z value is more preferably 7.3 or less. When the z value is less than 6.0, amounts of an RM₃ phase and an RM₂ phase appearing at the time of the fabrication of the alloy powder increase, and such an alloy powder cannot sufficiently get rid of the RM₃ phase and the RM₂ phase even by being nitrided. Accordingly, residual amounts of the RM₃ phase and the RM₂ phase increase. The z value is more preferably 6.3 or more. A mechanism for reducing the RM₃ phase and the RM₂ phase by the nitriding, which has not been made clear yet, may roughly be as follows. That is, in accordance with, for example, the enlargement of the crystal lattice and the change of the electron structure at the time of the entrance of nitrogen, the RM₃ phase and the RM₂ phase are converted to an R₂M₁₇Nₓ phase, resulting in the disappearance or the reduction of the RM₃ phase and the RM₂ phase.

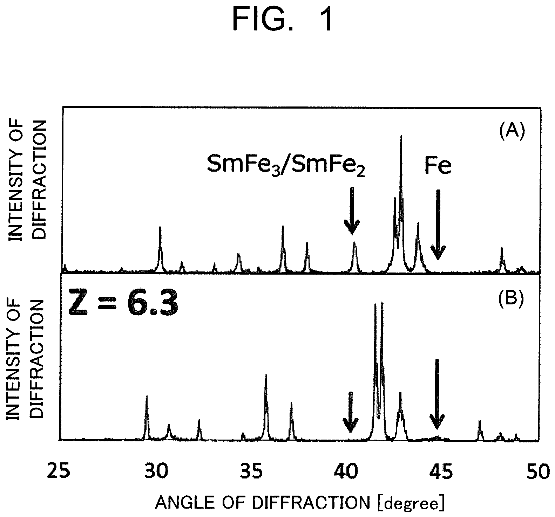

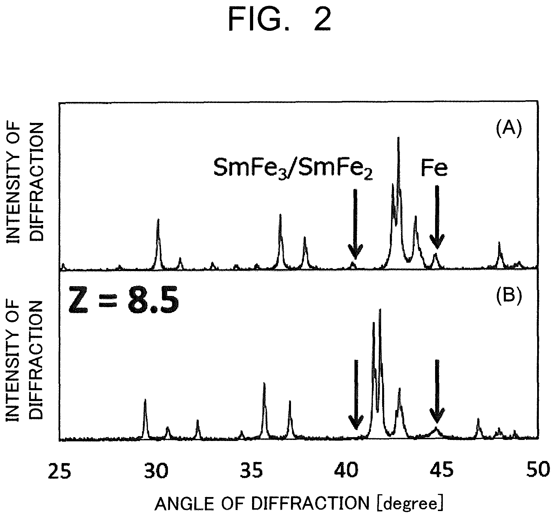

A change of constituent phases of a magnet material (alloy) before and after an alloy powder is nitrided will be described based on the X-ray diffraction results in FIG. 1 and FIG. 2. FIG. 1 is a chart illustrating the X-ray diffraction results of a magnet material of an example 1 (to be described later), (A) is an X-ray diffraction profile of an alloy powder before the nitriding (Sm(Cr_{0.08}Si_{0.03}Fe_{0.89})_{6.3}), and (B) is an X-ray diffraction profile of the alloy powder after the nitriding (SmN_{1.25}(Cr_{0.08}Si_{0.03}Fe_{0.89})_{6.3}). FIG. 2 is a chart illustrating the X-ray diffraction results of a magnet material of a comparative example 1 (to be described later), (A) is an X-ray diffraction profile of an alloy powder before the nitriding (Sm(Cr_{0.08}Si_{0.03}Fe_{0.89})_{8.5}), and (B) is an X-ray diffraction profile of the alloy powder after the nitriding (SmN_{1.25}(Cr_{0.03}Si_{0.03}Fe_{0.89})_{8.5}).

As illustrated in (A) of FIG. 1, in the X-ray diffraction profile of the alloy powder having the Sm-(Fe, Cr, Si)-Ni-based alloy composition whose z value is 7.5 or less, peaks of a SmFe₃ phase/SmFe₂ phase appear, but no peak of an α-Fe phase appears. When such an alloy powder is nitrided, as is seen from (B) in FIG. 1, in the X-ray diffraction profile after the nitriding, the peaks of the SmFe₃ phase/SmFe₂ phase disappear almost completely and almost no peak of the α-Fe phase appears. On the other hand, as illustrated in (A) of FIG. 2, in the X-ray diffraction profile of the alloy powder having the alloy composition whose z value is more than 7.5, peaks of a SmFe₃ phase/SmFe₂ phase and peaks of an α-Fe phase appear. As illustrated in (B) in FIG. 2, in the X-ray diffraction profile after the nitriding, the peaks of the SmFe₃ phase/SmFe₂ phase disappear almost completely but the peaks of the α-Fe phase remain. This shows that even the nitriding does not make the α-Fe phase disappear.

As described above, in the R-(M, Cr, Si)-N-based material powder whose atomic ratio z falls within a range of 6.0 to 7.5, the RM₃ phase and the RM₂ phase, which are present before the nitriding, disappear after the nitriding. Further, almost no α-Fe phase is present both before and after the nitriding, owing to the z value set smaller than the Sm/Fe ratio (2/17) which is based on the Sm₂Fe₁₇ phase. Accordingly, it is possible to provide an R-(M, Cr, Si)-N-based magnet material having improved magnetic properties owing to a reduced content of the impurity phases such as the α-Fe phase, the RM₃ phase, and the RM₂ phase and having improved thermal stability owing to Cr and Si contained therein.

Amounts of the impurity phases such as the α-Fe phase, the RM₃ phase, and the RM₂ phase in the R-(M, Cr, Si)-N-based magnet material are estimated based on comparison of peak intensity ratios of these phases in the X-ray diffraction profile. The α-Fe phase preferably satisfies the condition of I_{α-Fe}/I₂₋₁₇₋₃ < 0.05, where I_{α-Fe} is the maximum intensity out of X-ray diffraction peaks from the α-Fe phase, and I₂₋₁₇₋₃ is the maximum intensity out of X-ray diffraction peaks from the R₂M₁₇N₃ phase. By satisfying this condition, it is possible to hinder deterioration of the magnetic properties ascribable to the α-Fe phase. The RM₃ phase and the RM₂ phase preferably satisfy the conditions of I₁₋₂/I₂₋₁₇₋₃ < 0.05 and I₁₋₃/I₂₋₁₇₋₃ < 0.05, where I₁₋₂ is the maximum intensity out of X-ray diffraction peaks from the RM₂ phase, and I₁₋₃ is the maximum intensity out of X-ray diffraction peaks from the RM₃ phase. By satisfying these conditions, it is possible to hinder deterioration of the magnetic properties ascribable to the RM₃ phase and the RM₂ phase.

The composition of the magnet material is analyzed by an ICP (Inductively Coupled Plasma) emission spectrochemical analysis method. The composition analysis is preferably conducted on a powder of the magnet material ground with, for example, a jet mill or a ball mill (alloy powder). The composition analysis of the alloy powder is repeated ten times, and an average value of measured values excluding the maximum value and the minimum value is defined as the composition of the magnet material. The composition analysis may be conducted on a rough powder not yet ground.

The X-ray diffraction of the magnet material is carried out by powder XRD (X-ray Diffraction). A sample is fully ground using a mortar or a ball mill. This powder is put on a sample stage, and XRD measurement is conducted on the powder. Specifically, diffraction intensity is measured by an X-ray diffractometer including an X-ray generator (SmartLab (9 kW) XG) manufactured by Rigaku Corporation) and an X-ray detector (D/teXUltra manufactured by Rigaku Corporation) at a 200 mA tube current and a 45 kV tube voltage under the condition of a 0.01° measurement step width and a 20°/mm sweep rate.

The thermal stability of the magnet material is evaluated through the measurement of a thermal decomposition rate by DSC (Differential Scanning Calorimetry). In DSC, the sample is heated in a temperature range from room temperature to 1250°C at a heating rate of 10°C/min under the condition of a 50 mL/min argon gas flow. The thermal stability is evaluated based on the peak temperature, which indicates the thermal decomposition temperature, found from the measurement result of DSC.

The magnet material and a permanent magnet of the embodiment are fabricated as follows, for instance. First, an alloy powder containing predetermined amounts of elements is prepared. The prepared alloy powder has the composition expressed by the aforesaid composition formula (2). An example of a method to prepare the alloy powder is to grind an alloy ingot fabricated through casting of molten metal prepared by an arc melting method or a high-frequency melting method or to grind an alloy thin strip fabricated through rapid cooling of the molten metal. Examples of other methods to prepare the alloy powder include a mechanical alloying method, a mechanical grinding method, a gas atomization method, and a reduction diffusion method. An alloy powder prepared by any of these methods may be used. The alloy powder or the alloy not yet ground may be heat-treated as required for homogenization.

The alloy powder into which the alloy ingot or the alloy thin strip is ground preferably has a 25 µm particle size or less. The alloy powder having the 25 µm particle size or less can be obtained through sieving using a test sieve having 25 µm openings conforming to the JIS Standard (JIS Z 8801). The alloy powder having the 25 µm particle size or less allows nitrogen to sufficiently enter the inside of its particles and thus all of its particles can be nitrided. This can enhance homogeneity of the generated R₂(M, Cr, Si)₁₇N₃ phase. For the grinding of the alloy ingot or the alloy thin strip, a jet mill or a ball mill is used, for instance. To prevent oxidization of the alloy powder, the grinding is preferably carried out in an inert gas atmosphere, for instance.

Next, the alloy powder is nitrided to contain nitrogen, whereby the magnet material is fabricated. In the nitriding, the alloy powder is heat-treated at an about 300 to about 900°C temperature in a nitrogen gas atmosphere having an about 0.1 to about 100 atm. for about 0.1 to about 100 hours. To enhance the homogeneity of the R₂(M, Cr, Si)₁₇N₃ phase of the magnet material of the embodiment, the conditions of the nitriding are more preferably such that the pressure of the nitrogen gas atmosphere is a 0.5 to 10 atom., the processing temperature is 450 to 750°C, and the processing time is 2 to 24 hours.

The atmosphere at the time of nitriding the alloy powder may be an atmosphere of a nitrogen compound gas such as ammonia instead of the nitrogen gas. In some case, using gas in which the nitrogen gas or the nitrogen compound gas is mixed with hydrogen enables to control a nitridation reaction. The use of the nitrogen compound gas such as ammonia or the mixed gas of the nitrogen gas and the hydrogen gas enables to replace part of the nitrogen in the magnet material with the hydrogen. To replace part of the nitrogen with carbon or boron, the alloy powder not yet nitrided may be made to contain carbon or boron, or the magnet material may be made to contain carbon or boron using carbon compound gas or boron compound gas

To fabricate the permanent magnet of the embodiment, the magnet material powder of the embodiment is sintered by, for example, hot pressing, hot isostatic pressing, or discharge plasma sintering. Specifically, the magnet material powder is filled in a mold installed in, for example, an electromagnet and while a magnetic field is applied, the magnet material powder is press-formed into a compression-molded body having oriented crystal axes. This compression-molded body is sintered under an appropriate condition, whereby a highly dense sintered magnet is fabricated. The sintering is preferably carried out in a vacuum atmosphere or an atmosphere of inert gas such as Ar gas. The magnet material of the embodiment has excellent thermal stability and thus can be sintered at high temperatures, enabling to fabricate the dense sintered magnet. The magnet material of the embodiment may be used as a bond magnet. In fabricating the bond magnet, a commonly used epoxy-based or nylon-based resin binder or a metal binder such as a low-melting-point metal or a low-melting-point alloy is used. To fabricate the bond magnet, the magnet material powder of the embodiment is mixed with the binder and the resultant mixture is filled in the mold to be press-formed.

The permanent magnet of the embodiment is usable in various kinds of motors and power generators. The permanent magnet of the embodiment is also usable as a stationary magnet or a variable magnet of a variable magnetic flux motor and a variable magnetic flux power generator. Various motors and power generators are formed using the permanent magnet of the embodiment. Where the permanent magnet of the embodiment is used in a variable magnetic flux motor, the art disclosed in JP-A No. 2008-29148 or JP-A No. 2008-43172 is applicable to the structure or a drive system of the variable magnetic flux motor.

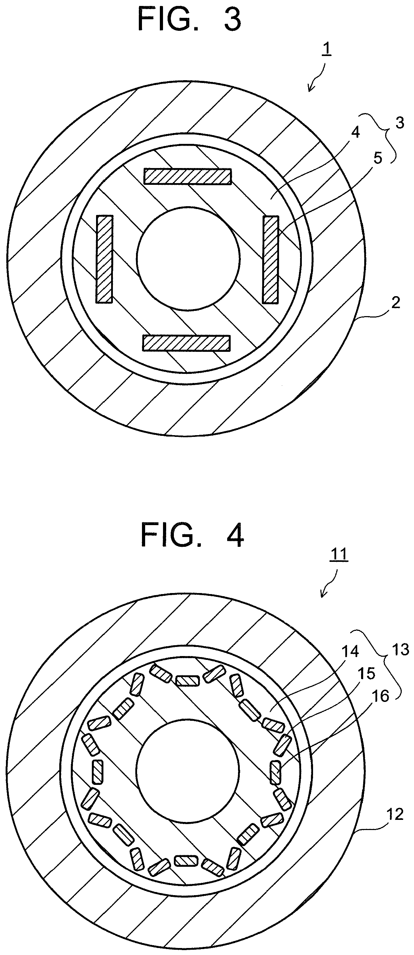

Next, a motor and a power generator of embodiments will be described with reference to the drawings. FIG. 3 illustrates a permanent magnet motor of an embodiment. In the permanent magnet motor 1 illustrated in FIG. 3, a rotor 3 is in a stator 2. The permanent magnets 5 of the embodiment are in a core 4 of the rotor 3. The permanent magnet motor 1 can have higher efficiency, be downsized, and be reduced in cost owing to the properties of the permanent magnet of the embodiment.

FIG. 4 illustrates a variable magnetic flux motor of an embodiment. In the variable magnetic flux motor 11 illustrated in FIG. 4, a rotor 13 is in a stator 12. The permanent magnets of the embodiment are in a core 14 of the rotor 13, each as at least one of a stationary magnet 15 or a variable magnet 16. The magnetic flux density (flux quantum) of the variable magnets 16 is variable. The variable magnets 16 have a magnetization direction perpendicular to a Q-axis direction and thus is not influenced by a Q-axis current and can be magnetized by a D-axis current. A magnetization winding (not illustrated) is on the rotor 13. When a current is passed through the magnetization winding, its magnetic field acts directly on the variable magnets 16. The variable magnetic flux motor 11 is capable of outputting a large torque even with a small device size and thus is suitable as motors of hybrid electric vehicles and electric vehicles required to have a high-power and downsized motor.

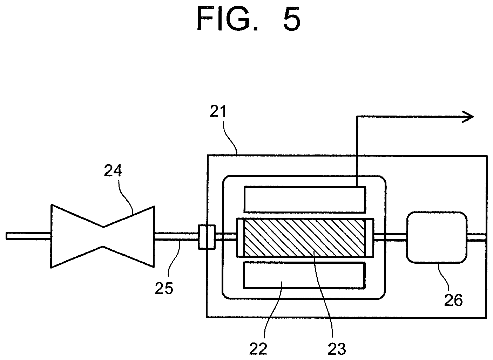

FIG. 5 illustrates a power generator according to an embodiment. The power generator 21 illustrated in FIG. 5 includes a stator 22 using the permanent magnet of the embodiment. A rotor 23 inside the stator 22 is connected via a shaft 25 to a turbine 24 which is at one end of the power generator 21. The turbine 24 is rotated by an externally supplied fluid. Instead of rotating the turbine 24 by the fluid, the shaft 25 may be rotated by dynamic rotation transmitted thereto, such as regenerative energy of the vehicle. The shaft 25 is in contact with a commutator (not illustrated) which is on an opposite side of the turbine 24 across the rotor 23, and an electromotive force generated by the rotation of the rotor 23 passes as an output of the power generator 21 through an isolated phase bus and a main transformer (not illustrated), where it is boosted to a system voltage, and the boosted voltage is transmitted. The power generator 21 may be either an ordinary power generator or a variable magnetic flux power generator. The rotor 23 is electrically charged due to static electricity from the turbine 24 and an axial current accompanying power generation. The power generator 21 includes a brush 26 releasing the electrical charge of the rotor 23.

### EXAMPLES

Next, examples and their evaluation results will be described.

### (Example 1)

First, raw materials were blended at a predetermined ratio so that the mixture had a composition of "Sm(Cr_{0.08}Si_{0.03}Fe_{0.89})_{6.3}", and the mixture was arc-melted in an argon gas atmosphere into an alloy ingot. Next, the alloy ingot was heat-treated at about 1000°C in the argon gas atmosphere for about three days and thereafter was ground using a mortar. The resultant alloy powder was sieved using a sieve having 25 µm openings. The alloy powder having regulated particle size was heat-treated at a 700°C temperature in a nitrogen gas atmosphere with an about 1 atm. for four hours, whereby an intended magnet material powder was prepared.

Properties of the prepared magnet material powder was evaluated as follows. X-ray diffraction of the magnet material powder and the alloy powder not yet nitrided was measured. The X-ray diffraction was measured after each of the powders was fully ground into a non-oriented sample. FIG. 1 illustrates X-ray diffraction profiles of the alloy powder not yet nitrided and the magnet material powder. In the X-ray diffraction profiles, the intensity of a peak corresponding to (303) reflection indicating the maximum intensity out of peaks ascribable to a Sm₂Fe₁₇ phase (or a Sm₂Fe₁₇N₃ phase) was defined as I₂₋₁₇₋₃, the intensity of a peak corresponding to (116) reflection indicating the maximum intensity out of peaks ascribable to a SmFe₃ phase was defined as I₁₋₃, the intensity of a peak corresponding to (311) reflection indicating the maximum intensity out of peaks ascribable to a SmFe₂ phase was defined as I₁₋₂, and the intensity of a peak corresponding to (110) reflection indicating the maximum intensity out of peaks ascribable to an α-Fe phase was defined as I_{α-Fe}.

As previously described, the α-Fe phase appears neither before nor after the nitriding. Before the nitriding, the SmFe₃ phase or the SmFe₂ phase appears, but after the nitriding, the SmFe₃ phase and the SmFe₂ phase disappear almost completely. In the X-ray diffraction profile illustrated in (B) of FIG. 1, an I_{α-Fe}/I₂₋₁₇₋₃ ratio was 0.009, and an intensity ratio ((I₁₋₃ or I₁₋₂)/I₂₋₁₇₋₃) having a larger value out of an I_{1.2}/I₂₋₁₇₋₃ ratio and an I₁₋₃/I₂₋₁₇₋₃ ratio was 0.005.

To evaluate the thermal decomposition temperature of the prepared magnet material powder, differential scanning calorimetry (DSC) was conducted by the aforesaid method. The result shows that, at 810°C, there is a large peak indicating the thermal decomposition of the compound. This temperature is substantially the same as that of the comparative example 1 (to be described later). This has led to the confirmation that the effect of improving the thermal stability by the addition of Cr and Si is not lost.

### (Examples 2 to 10)

Raw materials were blended at predetermined ratios so that the mixtures after nitriding had the compositions in Table 1, and the mixtures were arc-melted in an argon gas atmosphere into alloy ingots. Next, the alloy ingots were heat-treated at about 1000°C in the argon gas atmosphere for about three days and thereafter were ground using a mortar. The resultant alloy powders were sieved using a sieve having 25 µm openings. The alloy powders having regulated particles sizes were heat-treated at the temperatures in Table 1 in a nitrogen gas atmosphere with an about 1 atom. for four hours, whereby intended magnet material powders were prepared. Properties of the prepared magnet material powders were evaluated in the same manner as in the example 1. Table 2 shows I_{α-Fe}/I₂₋₁₇₋₃ ratios and (I₁₋₃ or /I₁₋₂)/I₂₋₁₇₋₃ ratios in X-ray diffraction profiles of the magnet material powders and peak temperatures (peak temperatures indicating thermal decomposition) in DSC.

### (Comparative Examples 1 to 2)

Raw materials were blended at predetermined ratios so that the mixtures after nitriding had the compositions in Table 1, and the mixtures were arc-melted in an argon gas atmosphere into alloy ingots. Next, the alloy ingots were heat-treated at about 1000°C in the argon gas atmosphere for about three days and thereafter were ground using a mortar. The resultant alloy powders were sieved using a sieve having 45 µm openings. The alloy powders having regulated particles sizes were heat-treated at the temperatures in Table 1 in a nitrogen gas atmosphere with an about 1 atm. for four hours, whereby intended magnet material powders were prepared. Properties of the prepared magnet material powders were evaluated in the same manner as in the example 1. Table 2 shows I_{α-Fe}/I₂₋₁₇₋₃ ratios and (I₁₋₃ or /I₁₋₂)I₂₋₁₇₋₃) ratios in X-ray diffraction profiles of the magnet material powders and peak temperatures (peak temperatures indicating thermal decomposition) in DSC.

**[Table 1]**

| | Magnet Composition (Atomic Ratio) | Nitridation Condition |
|---|---|---|
| | | Temperature [°C] |
| Example 1 | SmN_{1.25}(Cr_{0.08}Si_{0.03}Fe₀₈₉)_{6.34} | 700 |
| Example 2 | SmN_{1.25}(Cr_{0.08}Si_{0.03}Fe_{0.89})_{7.4} | 700 |
| Example 3 | SmN_{1.30}(Cr_{0.10}Si_{0.03}Fe_{0.85}Ti_{0.02})_{7.4} | 650 |
| Example 4 | SmN_{1.25}(Cr_{0.08}Si_{0.03}Fe_{0.90}Mn_{0.02})_{7.3} | 650 |
| Example 5 | SmN_{1.46}(Cr_{0.08}Si_{0.04}Fe_{0.85}Ni_{0.03})_{7.5} | 600 |
| Example 6 | SmN_{1.31}(Cr_{0.07}Si_{0.03}Fe_{0.86}Zr_{0.04})_{7.4} | 600 |
| Example 7 | SmN_{1.28}(Cr_{0.07}Si_{0.02}Fe_{0.89}Nb_{0.02})_{7.3} | 650 |
| Example 8 | SmN_{1.19}(Cr_{0.08}Si_{0.03}Fe_{0.89}Al_{0.03})_{6.2} | 700 |
| Example 9 | SmN_{1.22}(Cr_{0.08}Si_{0.03}Fe_{0.89}Ga_{0.04})_{6.2} | 650 |
| Example 10 | Sm_{0.90}Pr_{0.10}N_{1.08}(Cr_{0.08}Si_{0.03}Fe_{0.88})_{6.1} | 700 |
| Example 11 | Sm_{0.89}Nd_{0.11}N_{1.10}(Cr_{0.08}Si_{0.03}Fe_{0.89})_{6.1} | 700 |
| Example 12 | Sm_{0.90}Ce_{0.10}N_{1.20}(Cr_{0.8}Si_{0.03}Fe_{0.89})_{6.5} | 700 |
| Example 13 | Sm_{0.91}La_{0.09}N_{1.21}(Cr_{0.8}Si_{0.03}Fe_{0.87}Cu_{0.02})_{6.6} | 700 |
| Example 14 | SmN_{1.34}(Cr_{0.07}Si_{0.04}Fe_{0.86}Co_{0.03})_{7.4} | 650 |
| Example 15 | Sm_{0.88}Pr_{0.12}N_{1.01}(Cr_{0.09}Si_{0.03}Fe_{0.85}Zn_{0.03})_{6.0} | 700 |
| Example 16 | Sm_{0.81}Pr_{0.09}Nd_{0.10}N_{1.05}(Cr_{0.06}Si_{0.05}Fe_{0.89})_{6.1} | 700 |
| Example 17 | SmN_{0.63}B_{0.02}(Cr_{0.10}Si_{0.01}Fe_{0.89})_{6.5} | 700 |
| Example 18 | SmN_{0.88}B_{0.02}(Cr_{0.11}Si_{0.02}Fe_{0.85}Al_{0.02})_{6.8} | 700 |
| Example 19 | SmN_{1.14}C_{0.01}(Cr_{0.06}Si_{0.02}Fe_{0.92})_{7.0} | 700 |
| Example 20 | SmN_{1.07}C_{0.01}(Cr_{0.07}Si_{0.01}Fe_{0.88}Zr_{0.04})_{7.1} | 600 |
| Comparative Example 1 | SmN_{1.31}(Cr_{0.08}Si_{0.03}Fe_{0.89})_{8.5} | 730 |
| Comparative Example 2 | SmN_{1.42}Fe_{7.0} | 550 |

**[Table 2]**

| | Intensity Ratio Of X-Ray Diffraction Peaks | | Dsc Peak Temperature [°C] |
|---|---|---|---|
| | I_{α-Fe}/I₂₋₁₇₋₃ | (I₁₋₂ or I₁₋₃)I₂₋₁₇₋₃ | |
| Example 1 | 0.009 | 0.005 | 810 |
| Example 2 | 0.017 | 0.000 | 820 |
| Example 3 | 0.020 | 0.000 | 770 |
| Example 4 | 0.018 | 0.000 | 780 |
| Example 5 | 0.042 | 0.000 | 730 |
| Example 6 | 0.010 | 0.000 | 750 |
| Example 7 | 0.011 | 0.000 | 780 |
| Example 8 | 0.006 | 0.008 | 810 |
| Example 9 | 0.008 | 0.009 | 780 |
| Example 10 | 0.004 | 0.010 | 820 |
| Example 11 | 0.005 | 0.009 | 815 |
| Example 12 | 0.007 | 0.004 | 815 |
| Example 13 | 0.010 | 0.004 | 825 |
| Example 14 | 0.044 | 0.000 | 770 |
| Example 15 | 0.000 | 0.013 | 840 |
| Example 16 | 0.005 | 0.012 | 830 |
| Example 17 | 0.009 | 0.005 | 825 |
| Example 18 | 0.012 | 0.007 | 815 |
| Example 19 | 0.014 | 0.000 | 810 |
| Example 20 | 0.013 | 0.000 | 750 |
| Comparative Example 1 | 0.096 | 0.000 | 820 |
| Comparative Example 2 | 0.023 | 0.000 | 710 |

It has been confirmed from Table 2 that any of the magnet materials of the examples 1 to 20 is very small in the I_{α-Fe}/I₂₋₁₇₋₃ ratio and the (I₁₋₃ or /I₁₋₂)I₂₋₁₇₋₃) ratio and is composed of a substantially homogeneous R₂(M, Cr, Si)₁₇Nₓ phase. It has been further confirmed that in the magnet materials of the examples 1 to 20, the DSC peak temperature is high and thus the effect of improving the thermal stability by the addition of Cr and Si is not lost.

### (Examples 21 to 30)

Sintered magnets were fabricated by a hot pressing method using the magnet material powders of the examples 1 to 20. Conditions of the hot pressing were an about 730°C temperature and an about 200 MPa pressure. The density of each of the fabricated sintered magnets was about 7.5 to about 7.9 g/cm³. A coercive force, residual magnetization, and the maximum energy product of each of these sintered magnets were measured. The coercive force was about 800 to about 1000 kA/m, the residual magnetization was about 0.7 to about 0.9 T, and the maximum energy product was about 100 to about 130 kJ/m³.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A magnet material comprising a composition expressed by
a composition formula:
R₁Nₓ(CrₚSi_{q}M_{1-p-q})_{z},
where R represents at least one element selected from the group consisting of yttrium (Y), lanthanum (La), cerium (Ce), praseodymium (Pr), neodymium (Nd), and samarium (Sm), M represents at least one element selected from the group consisting of iron (Fe) and cobalt (Co), x represents an atomic ratio satisfying 0.5≤x≤1.5, p represents an atomic ratio satisfying 0.005≤p≤0.2, q represents an atomic ratio satisfying 0.005≤q≤0.2, and z represents an atomic ratio satisfying 6.0≤z≤7.5,
wherein the magnet material satisfies a condition of I_{α-Fe}/I₂₋₁₇₋₃ < 0.05, where I_{α-Fe} is a maximum intensity of X-ray diffraction peaks from an α-Fe phase and I₂₋₁₇₋₃ is a maximum intensity of X-ray diffraction peaks from an R₂M₁₇N₃ phase, in an X-ray diffraction profile of the magnet material.

2. The magnet material of claim 1, wherein the magnet material satisfies conditions of I₁₋₂/I₂₋₁₇₋₃ < 0.05 and I₁₋₃/I₂₋₁₇₋₃ < 0.05, where I₁₋₂ is a maximum intensity of X-ray diffraction peaks from an RM₂ phase and I₁₋₃ is a maximum intensity of X-ray diffraction peaks from an RM₃ phase, in the X-ray diffraction profile of the magnet material.

3. The magnet material of claim 1, wherein 50 at% or more of the R element is samarium (Sm).

4. The magnet material of claim 1, wherein 50 at% or more of the M element is iron (Fe).

5. The magnet material of claim 1, wherein 20 at% or less of the M element is replaced with at least one element selected from the group consisting of titanium (Ti), zirconium (Zr), hafnium (Hf), vanadium (V), niobium (Nb), tantalum (Ta), molybdenum (Mo), tungsten (W), manganese (Mn), nickel (Ni), copper (Cu), zinc (Zn), aluminum (Al), gallium (Ga), and germanium (Ge).

6. The magnet material of claim 1, wherein 50 at% or less of the N element is replaced with at least one element selected from the group consisting of hydrogen (H), boron (B), and carbon (C).

7. The magnet material of claim 1, wherein the atomic ratio z is not less than 6.3 nor more than 7.3.

8. A permanent magnet comprising the magnet material of claim 1.

9. A motor comprising the permanent magnet of claim 8.

10. A power generator comprising the permanent magnet of claim 8.
